# EUROPÄISCHE PATENTSCHRIFT

(11) **EP 1 888 366 B1**
(45) Veröffentlichungstag und Bekanntmachung des Hinweises auf die Patenterteilung: **02.02.2011**
(21) Anmeldenummer: 06724594.4
(22) Anmeldetag: 27.04.2006
(51) Int. Cl.: B60N 2/015

(54) **FAHRZEUGSITZ, INSBESONDERE SITZBANK FÜR EIN KRAFTFAHRZEUG**
VEHICLE SEAT, IN PARTICULAR SEAT BENCH FOR A MOTOR VEHICLE
SIÈGE DE VÉHICULE, NOTAMMENT BANQUETTE DE VÉHICULE À MOTEUR

(30) Priorität: 27.05.2005 DE 102005024816
(43) Veröffentlichungstag der Anmeldung: 20.02.2008
(73) Patentinhaber: Johnson Controls GmbH, 51399 Burscheid (DE)
(72) Erfinder: WILLING, Thomas, 50733 Köln (DE); HAIDA, Stefan, 42855 Remscheid (DE); MEIER, Bernd, 57439 Attendorn (DE); STEIN, Alexander, 51375 Leverkusen (DE)
(74) Vertreter: Hemmelmann, Klaus
(86) Internationale Anmeldenummer: PCT/EP2006/003894
(87) Internationale Veröffentlichungsnummer: WO 2006/128531

(56) Entgegenhaltungen:
- EP-A- 1 160 121
- DE-A1- 19 916 422
- DE-C1- 19 930 945
- DE-U1- 20 006 691
- US-B1- 6 283 550
- US-B1- 6 629 710

## Beschreibung

Die Erfindung betrifft einen Fahrzeugsitz, insbesondere eine Sitzbank für ein Kraftfahrzeug, der mittels mindestens eines eine Aufnahme umgreifenden Fangmauls lösbar am Fahrzeugboden verankerbar ist, mit Mitteln zur Kompensation von Toleranzen zwischen Fangmaul und Aufnahme, wobei die Aufnahme einen horizontalen, quer zur Sitzrichtung verlaufenden Bolzen umfasst, welcher in einer wannenartigen Halterung angeordnet ist, und wobei die Mittel insbesondere zur Kompensation von Toleranzen in vertikaler Richtung geeignet sind und Federmittel umfassen, welche bei der Montage des Fahrzeugsitzes vom Fangmaul gegen den Bolzen pressbar sind.

### Stand der Technik

Ein Fahrzeugsitz der eingangs genannten Art wird in der Gebrauchsmusterschrift DE 200 06 691 U1 offenbart. Der Fahrzeugsitz ist mit schwenkbaren Drehfallen ausgestattet, welche zum Umgreifen von am Fahrzeugboden befestigten Bolzen vorgesehen sind. Eine Sicherheitseinrichtung weist einen auf die Drehfalle wirkenden Nocken auf, der von einem federbelasteten oder federartigen Steuerelement angesteuert wird, sobald dieses mit dem Bolzen in Kontakt gerät. Der Mechanismus ist dazu geeignet, einen selbstnachstellenden Toleranz- und Spielausgleich der Lage des Bolzens zu bewirken. In Y-Richtung des Fahrzeugs kann der Bolzen ferner über Gummielemente gedämpft werden. Eine ähnliche Vorrichtung ist aus der Patentschrift US 6,629,710 B1 bekannt.

Diese Ausbildungen sind technisch anspruchsvoll und damit vergleichsweise kostenintensiv.

In der Patentschrift US 6,283,550 B1 wird eine hakenförmige Ausnehmung in einer Sitzhalterung beschrieben, die in dem zum Umgreifen eines Bolzens vorgesehenen Bereich zur Vermeidung von Geräuschen mit einer Kunststoffbeschichtung versehen ist.

Aus der Patentanmeldung EP 1 160 121 A1 ist ein Drehfallenschloss zur seitlichen Verriegelung einer schwenkbaren Rückenlehne an der Fahrzeugkarosserie bekannt, bei welchem in der Ausnehmung der Drehfalle ein Dämpfungselement angeordnet ist.

Die Offenlegungsschrift DE 199 16 422 A1 beschreibt ein Drehfallenschloss zur Befestigung eines Fahrzeugsitzes am Fahrzeugboden, das mit einer sich unter Vorspannung am Fahrzeugboden abstützenden Blattfeder ausgestattet ist.

Aus der Offenlegungsschrift DE 103 10 382 A1 ist ein weiterer Fahrzeugsitz bekannt. Er weist eine Vorrichtung zur lösbaren Befestigung am Boden einer Fahrzeugkarosserie auf, welche ein in ein stabförmiges Gegenstück lösbar einsetzbares Fangmaul sowie eine gegenüber dem Fangmaul um eine Drehachse von einer Arretierstellung in eine Lösestellung schwenkbar angeordnete Verriegelungsklaue umfasst, mit welcher das Gegenstück umgreifbar ist. Die Verriegelungsklaue ist gegenüber dem Fangmaul entlang der Drehachse verschiebbar ausgebildet und nach der Verschiebung in die Lösestellung schwenkbar.

Besondere Mittel zur Kompensation von Toleranzen zwischen Fangmaul und Gegenstück werden dabei nicht offenbart.

### Aufgabe

Der Erfindung liegt die Aufgabe zugrunde, einen gattungsgemäßen Fahrzeugsitz derart auszubilden, dass mit konstruktiv einfachen und kostengünstigen Mitteln beim Betrieb des Fahrzeugs eine Geräuschentwicklung im Bereich der Aufnahme verhindert und auch eine Kompensation von Toleranzen quer zur Sitzrichtung gewährleistet wird. Darüber hinaus soll die Montage des Fahrzeugsitzes auch von einer Person problemlos durchführbar sein.

### Lösung

Die Aufgabe wird erfindungsgemäß dadurch gelöst, dass die Federmittel als an der hinteren Vertikalfläche der Halterung befestigter Federbügel ausgebildet sind, welcher sich U-förmig unterhalb des Bolzens nach vorne erstreckt und bei der Montage des Fahrzeugsitzes von der vorderen Unterkante des Fangmauls nach oben spannbar ist.

Die Unteransprüche betreffen bevorzugte Ausführungsformen der Erfindung.

### Figuren

Die Figuren stellen beispielhaft und schematisch verschiedene Ausführungen der Erfindung dar.

Es zeigen:
- Fig. 1: einen erfindungsgemäßen Fahrzeugsitz in Gebrauchsstellung (Fig. 1a) und Staustellung (Fig. 1b),
- Fig. 2: eine perspektivische Ansicht der vorderen Aufnahme des Fahrzeugsitzes,
- Fig. 3: eine seitliche Ansicht der Aufnahme in Gebrauchsstellung (Fig. 3a) und Staustellung (Fig. 3b) des Fahrzeugsitzes,

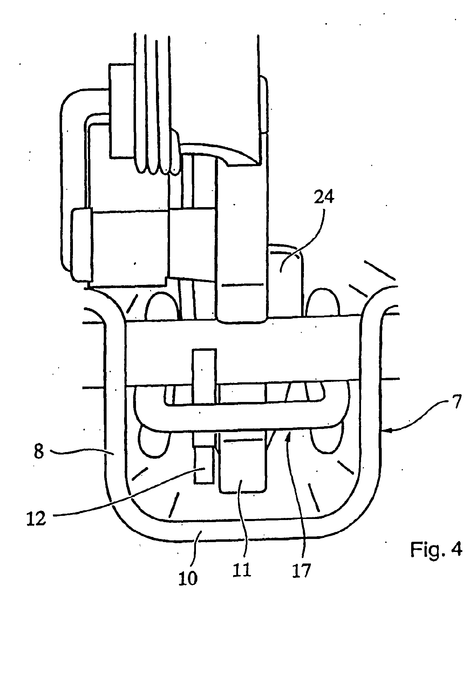

- Fig. 4: die Aufnahme nach Fig. 3a in frontaler Ansicht,
- Fig. 5: eine seitliche Ansicht der Aufnahme nach einer anderen Ausführung der Erfindung,
- Fig. 6: vergrößerte Ausschnitte aus Fig. 5 in verschiedenen Stadien des Montageprozesses,
- Fig. 7: das Einsetzen des entnommenen Fahrzeugsitzes in die Aufnahme.

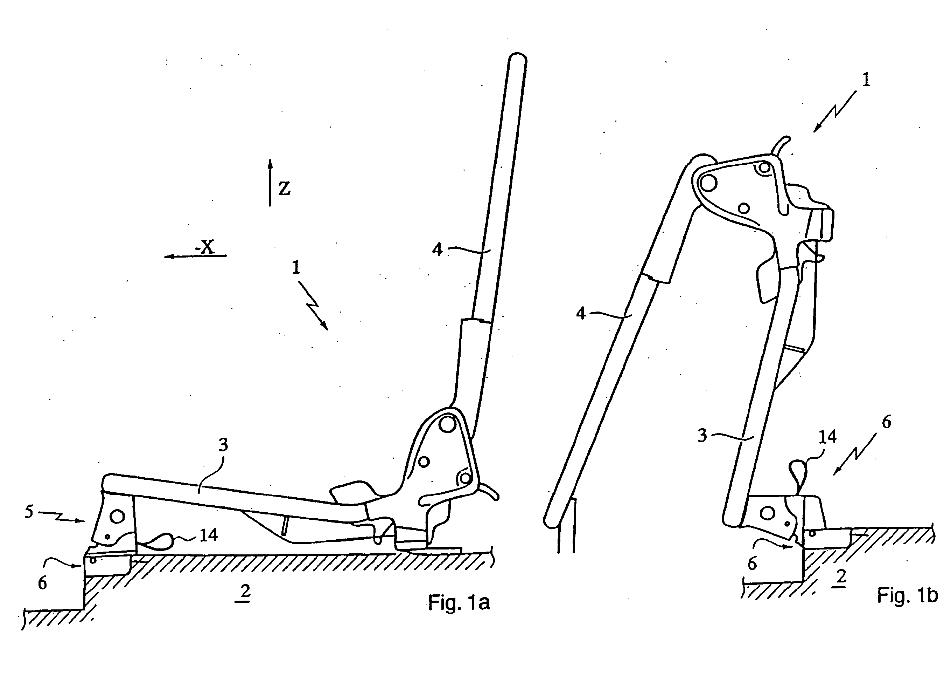

Der in Fig. 1 abgebildete Fahrzeugsitz 1, von welchem nur die Metallstruktur ohne Polsterauflagen gezeigt wird, besteht aus einem am Fahrzeugboden 2 lösbar verankerten Sitzteil 3, das seinerseits gelenkig mit der Rückenlehne 4 verbunden ist. Aus der Gebrauchsstellung nach Fig. 1a heraus, in welcher die Rückenlehne 4 im Wesentlichen senkrecht und das Sitzteil 3 nahezu waagerecht ausgerichtet sind, können die Rückenlehne 4 auf das Sitzteil 3 geklappt und das so entstandene Paket nach vorne in eine vertikale Staustellung geschwenkt werden (Fig. 1 b). Eine derartige Anordnung ist bekannt und wird üblicherweise als "fold & tumble" bezeichnet.

Das Vorschwenken erfolgt über ein in die vordere, lösbare Aufnahme 5 integriertes Gelenk 6. Die nachfolgend genannten Begriffe "vorne" und "hinten" beziehen sich dabei auf die Blickrichtung des Sitzinsassen, wobei "vorne" üblicherweise der -X-Richtung des gängigen Koordinatensystems des Fahrzeugs, also der Fahrtrichtung, entspricht. Bei einem quer zur Fahrtrichtung angeordneten Fahrzeugsitz ist naturgemäß die Y-Achse heranzuziehen. Unter "Montage" wird nachfolgend der Einbau des Fahrzeugsitzes in die Gebrauchsstellung zumindest des Sitzteils verstanden.

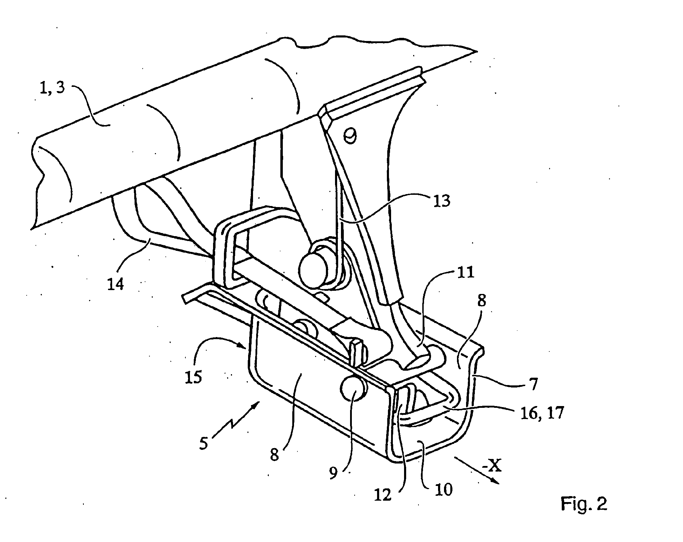

Die vordere Aufnahme 5 für den Fahrzeugsitz 1 besteht, wie aus Fig. 2 ersichtlich, aus einer wannenartige Halterung 7, die aus einem Blechteil geformt und an ihrem vorderen Ende offen gehalten ist. Ein in die seitlichen Vertikalflächen 8 der Halterung 7 eingelassener Bolzen 9 erstreckt sich mit Abstand zur Horizontalfläche 10 quer und waagerecht durch den vorderen Bereich der Halterung 7.

Der Bolzen 9 wird bei montiertem Fahrzeugsitz 1 von einem am Sitzteil 3 angeordneten Fangmaul 11 umgriffen, das mit einem Schwenkriegel 12 ausgestattet ist. Der Schwenkriegel 12 wird mittels einer Schenkelfeder 13 in Richtung seiner Schließstellung vorgespannt. In dieser Stellung kann der Fahrzeugsitz 1 zwar um den Bolzen 9 herum nach vorne geschwenkt werden, ist jedoch weiterhin mit dem Fahrzeugboden 2 verbunden. Durch Ziehen an einer Lasche 14, die bei vorgeklapptem Sitzteil 3 zugänglich wird (siehe Fig. 1 b), können der Schwenkriegel geöffnet und der Fahrzeugsitz 1 entnommen werden.

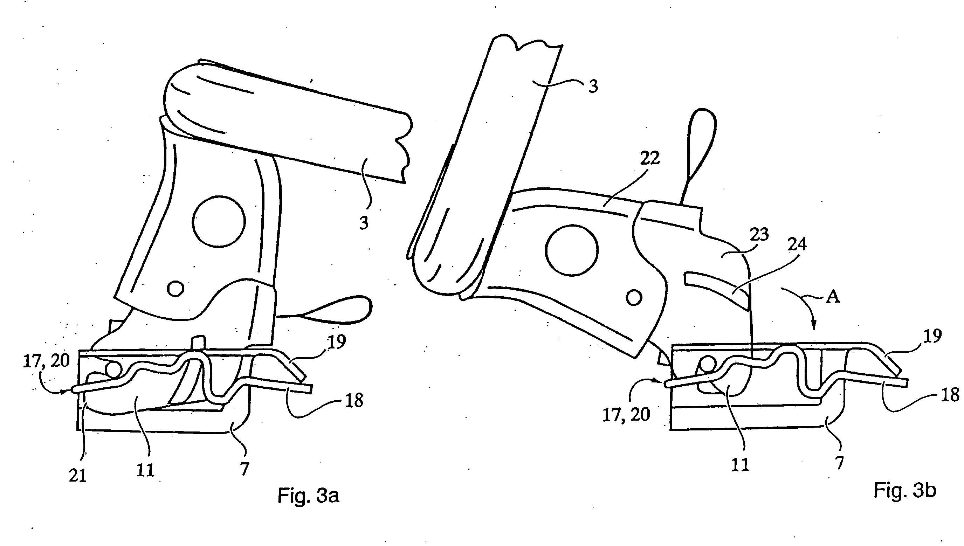

In die hintere Vertikalfläche 15 der Halterung 7 sind Federmittel 16 in Form eines U-förmigen Federbügels 17 eingelassen, der sich unterhalb des Bolzens 9 nach vorne erstreckt. Wie aus Fig. 3 ersichtlich, kragen die Schenkel 18 des Federbügels 17 nach hinten aus der Vertikalfläche 15 der Halterung 7 aus und finden in einer nach unten geneigten Abkantung 19 der Halterung 7 ein Widerlager, welches den Federbügel 17 in seiner etwa horizontalen Stellung hält. Die parallel zum Bolzen 9 verlaufende vordere Basis 20 des Federbügels 17 ist bei vorgeschwenktem Sitzteil 3 (Fig. 3b) unbelastet, wird beim Klappen des Sitzteils in seine Gebrauchsstellung (Fig. 3a) jedoch von der vorderen Unterkante 21 des Fangmauls 11 erfasst und nach oben gespannt. Dabei gerät der Federbügel 17 in Anlage an den Bolzen 9 und kompensiert somit Toleranzen in vertikaler (Z-) Richtung des Fahrzeugs.

Das Fangmaul 11 und die angrenzenden Verbindungsteile 22 zum Sitzteil 3 sind ferner zumindest partiell mit einer Beschichtung 23 aus einem gleitfähigem, thermoplastischen Kunststoff, insbesondere POM, versehen, welche auch den Bereich der möglichen Anlage an die hintere Vertikalfläche 15 der Halterung 7 umfasst. In Gebrauchsstellung des Sitzteils 3 (Fig. 3a) wird diese Beschichtung 22 durch Kontakt mit der Vertikalfläche 15 elastisch komprimiert, wodurch das Fangmaul in -X-Richtung auf den Bolzen 9 zu gespannt wird. Somit werden auch Toleranzen in Sichtrichtung des Sitzinsassen ausgeglichen.

An die Beschichtung 23 beidseitig einstückig angeformt sind Vorsprünge 24, welche den Bolzen 9 bogenförmig umgeben und beim Schwenken des Sitzteils 3 in seine Gebrauchsstellung in Kontakt mit den sich innerhalb der Halterung 7 erstreckenden Bereichen der Schenkel 18 des Federbügels 17 bringbar sind. Die Vorsprünge 24 erweitern sich in Montagerichtung A keilförmig und sind daher geeignet, den Federbügel 17 bei der Montage aufzuspreizen. Damit erfolgt ein Ausgleich des Spiels zwischen Aufnahme 5 und Fangmaul 11 auch in einer horizontalen Querrichtung (Y-Richtung) des Fahrzeugs.

Durch das Zusammenwirken aller genannten Maßnahmen werden somit Toleranzen in allen Koordinaten des Fahrzeugs bei der Montage des Fahrzeugsitzes ohne weiteres Zutun kompensiert, so dass Klapper- oder Quietschgeräusche beim Betrieb des Fahrzeugs verhindert werden.

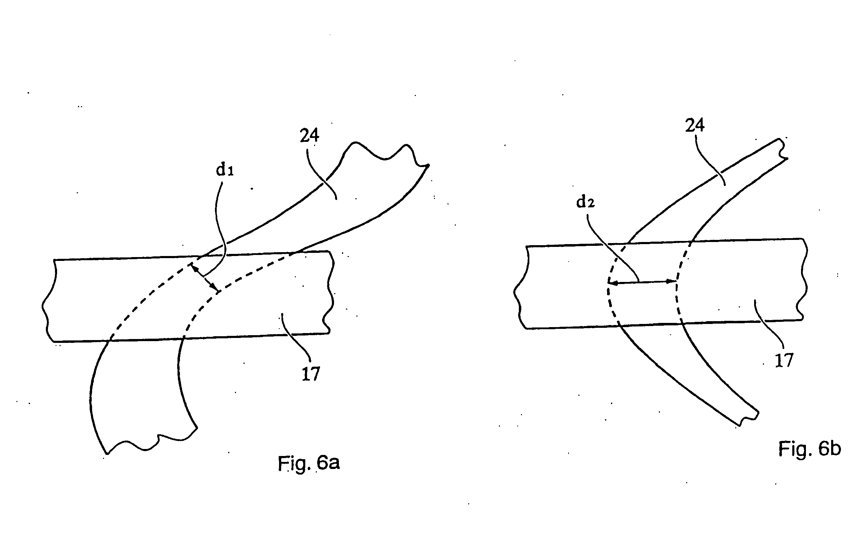

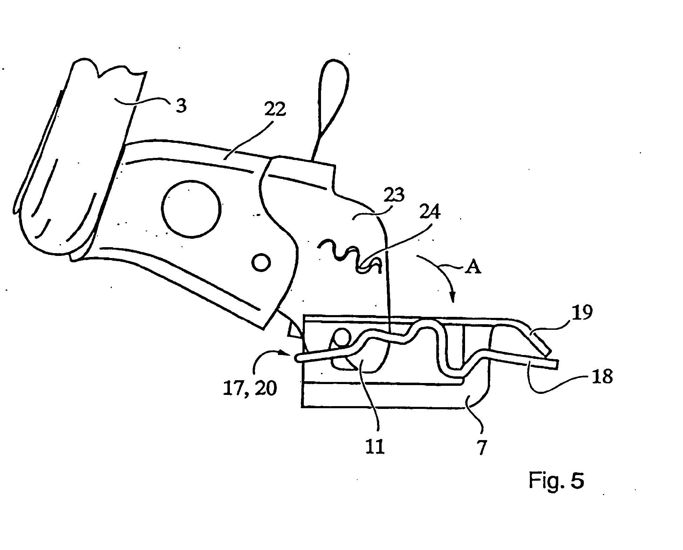

Um die Taktzeiten beim Spritzgießen der mit den Vorsprüngen 24 ausgestatteten Beschichtung zu verringern, kann vorgesehen werden, die Vorsprünge 24 in seitlicher Ansicht wellenartig und insgesamt dünner auszuführen (Fig. 5), um abkühlkritische Materialanhäufungen zu vermeiden. In den Bereichen der Vorsprünge 24, welche im Verlaufe der Gleitbewegung relativ zum Federbügel 17 schräg verlaufen, wird die Flächenpressung durch die infolge der Neigung vergrößerten Kontaktfläche verringert. Die Wanddicke d₁ der Vorsprünge 24 kann dort besonders gering ausgebildet werden (Fig. 6a). Die Bereiche der Vorsprünge 24 hingegen, die bei Anlage am Federbügel 17 orthogonal zu diesem ausgerichtet sind, können mit entsprechenden Verdickungen (Wanddicke d₂) versehen werden (Fig. 6b).

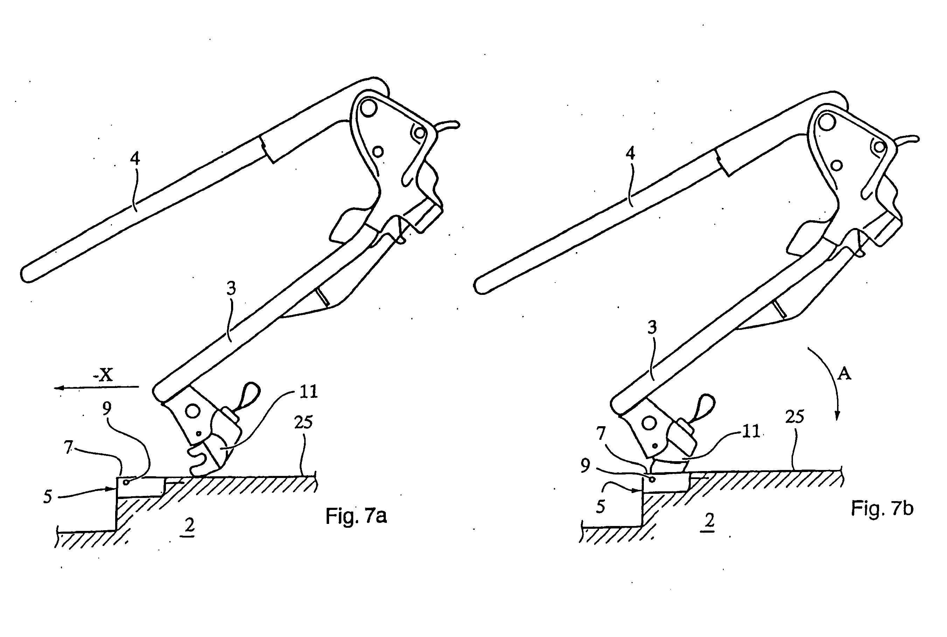

Beim Einsetzen des zuvor entnommenen Fahrzeugsitzes 1 in das Fahrzeug wird dieser, vorzugsweise bei vorgeklappter Rückenlehne, auf eine hinter der Aufnahme 5 befindliche karosserieseitige Horizontalfläche, beispielsweise den Kofferraumboden 25, aufgesetzt. Das Sitzteil 3 wird gegenüber dem Kofferraumboden 25 von einer außerhalb des Fahrzeugs stehenden und durch die Heckklappe greifenden Person in einer Schrägstellung gehalten (Fig. 7a). Das Gewicht des Fahrzeugsitzes 1 wird dabei im Wesentlichen über das Fangmaul 11 in den Kofferraumboden 25 abgeleitet. Der Fahrzeugsitz 1 kann nachfolgend nach vorne geschoben werden (-X-Richtung), bis das Fangmaul 11 unter Schwerkraftwirkung in die wannenartige Halterung 7 einfällt (Fig. 7b). Beim Kontakt mit dem Bolzen 9 wird der Schwenkriegel 12 gegen die Kraft der Schenkelfeder 13 zunächst geöffnet und umschließt den Bolzen beim weiteren Vorschieben. Nachfolgend kann das Sitzteil 3 um den Bolzen 9 herum nach unten in seine Gebrauchsstellung geschwenkt werden (Pfeil A), wobei die zuvor beschriebene Toleranzkompensation erfolgt. Nach dem Hochklappen der Rückenlehne 4 ist die Montage des Fahrzeugsitzes 1 vollständig abgeschlossen.

### Bezugszeichen

- 1: Fahrzeugsitz
- 2: Fahrzeugboden
- 3: Sitzteil
- 4: Rückenlehne
- 5: Aufnahme
- 6: Gelenk
- 7: Halterung
- 8: Vertikalfläche (seitlich) der Halterung
- 9: Bolzen
- 10: Horizontalfläche der Halterung
- 11: Fangmaul
- 12: Schwenkriegel
- 13: Schenkelfeder
- 14: Lasche
- 15: Vertikalfläche (hinten) der Halterung
- 16: Federmittel
- 17: Federbügel
- 18: Schenkel (des Federbügels)
- 19: Abkantung (der Halterung)
- 20: Basis (des Federbügels)
- 21: vordere Unterkante (des Fangmauls)
- 22: Verbindungsteil
- 23: Beschichtung
- 24: Vorsprünge
- 25: Kofferraumboden

## Patentansprüche

1. Fahrzeugsitz (1), insbesondere Sitzbank für ein Kraftfahrzeug, der mittels mindestens eines eine Aufnahme (5) umgreifenden Fangmauls (11) lösbar am Fahrzeugboden (2) verankerbar ist, mit Mitteln zur Kompensation von Toleranzen zwischen Fangmaul (11) und Aufnahme (5), wobei die Aufnahme (5) einen horizontalen, quer zur Sitzrichtung verlaufendenBolzen (9) umfasst, welcher in einer wannenartigen Halterung (7) angeordnet ist, und die Mittel insbesondere zur Kompensation von Toleranzen in vertikaler Richtung geeignet sind und Federmittel (16) umfassen, welche bei der Montage des Fahrzeugsitzes (1) vom Fangmaul (11) gegen den Bolzen (9) pressbar sind, **dadurch gekennzeichnet, dass** die Federmittel (16) als an der hinteren Vertikalfläche (15) der Halterung (7) befestigter Federbügel (17) ausgebildet sind, welcher sich U-förmig unterhalb des Bolzens (9) nach vorne erstreckt und bei der Montage des Fahrzeugsitzes (1) von der vorderen Unterkante (21) des Fangmauls (11) nach oben spannbar ist.

2. Fahrzeugsitz nach einem der Ansprüche 1, **dadurch gekennzeichnet, dass** die Mittel insbesondere zur Kompensation von horizontalen Toleranzen in Sitzrichtung geeignet sind und das Fangmaul (11) und/oder die Aufnahme (5) zumindest im Bereich der Anlage an der Auflage (5) und/oder dem Fangmaul (11) mit einer Beschichtung (23) versehen sind, welche bei der Montage des Fahrzeugsitzes (1) elastisch verformbar ist.

3. Fahrzeugsitz nach Anspruch 2, **dadurch gekennzeichnet, dass** die elastische Verformung in der Anlage des hinteren Bereichs des Fangmauls (11) an der wannenartigen Halterung (7) erfolgt, wodurch das Fangmaul (11) bei der Montage des Fahrzeugsitzes (1) in Richtung des Bolzens (9) spannbar ist.

4. Fahrzeugsitz nach einem der Ansprüche 1 bis 3, **dadurch gekennzeichnet, dass** die Mittel insbesondere zur Kompensation von horizontalen Toleranzen quer zur Sitzrichtung geeignet sind und seitlich an das Fangmaul (11) angeformte Vorsprünge (24) umfassen, welche bei der Montage des Fahrzeugsitzes (1) an vertikale Gegenflächen der Aufnahme (5) pressbar sind.

5. Fahrzeugsitz nach Anspruch 4, **dadurch gekennzeichnet, dass** die Vorsprünge (24) bei der Montage des Fahrzeugsitzes (1) an den Federbügel (17) pressbar sind.

6. Fahrzeugsitz nach Anspruch 4 oder 5, **dadurch gekennzeichnet, dass** die Vorsprünge (24), in seitlicher Ansicht, das Fangmaul (11) bogenförmig umgebend ausgebildet sind und sich, in frontaler Ansicht, in Montagerichtung keilförmig erweitern.

7. Fahrzeugsitz nach Anspruch 6, **dadurch gekennzeichnet, dass** die Vorsprünge (24) innerhalb der bogenförmigen Kontur wellenartig ausgebildet sind, wobei die bei der Montage am Federbügel (17) orthogonal anliegenden Bereiche der wellenartigen Ausbildung vorzugsweise verdickt ausgeführt sind.

8. Fahrzeugsitz nach einem der Ansprüche 4 bis 7, **dadurch gekennzeichnet, dass** die Vorsprünge (24) einstückig an die Beschichtung (23) angeformt sind.

9. Fahrzeugsitz nach einem der vorhergehenden Ansprüche, **dadurch gekennzeichnet, dass** das Fangmaul (11) bei der Montage des Fahrzeugsitzes (1) von hinten in Richtung der Aufnahme (5) über eine karosserieseitige Horizontalfläche schiebbar ist und bei Erreichen der Aufnahme (5) mit dieser ohne weiteres Zutun in Eingriff bringbar ist.

10. Fahrzeugsitz nach Anspruch 9, **dadurch gekennzeichnet, dass** das Fangmaul (11) beim Erreichen der Aufnahme (5) unter Schwerkraftwirkung und Umgreifen des Bolzens (9) nach unten in die wannenartige Halterung (7) einbringbar ist.

## Claims

1. Vehicle seat (1), in particular seat bench for a motor vehicle, which can be releasably anchored on the vehicle floor (2) by means of at least one coupling jaw (11) which engages around a mount (5), having means for compensating for tolerances between the coupling jaw (11) and mount (5), the mount (5) comprising a horizontal bolt (9) which extends transversely with respect to the seat direction and which is arranged in a trough-like holder (7), and the means are particularly suitable for compensating for tolerances in the vertical direction and comprise spring means (16) which can be pressed against the bolt (9) by the coupling jaw (11) during the mounting of the vehicle seat (1), **characterized in that** the spring means (16) are designed as a spring clip (17) which is fastened to the rear vertical surface (15) of the holder (7), said spring clip extending forwards in a U shape below the bolt (9) and being able to be upwardly stressed by the front lower edge (21) of the coupling jaw (11) during the mounting of the vehicle seat (1).

2. Vehicle seat according to Claim 1, **characterized in that** the means are particularly suitable for compensating for horizontal tolerances in the seat direction, and the coupling jaw (11) and/or the mount (5) are provided, at least in the region of bearing on the mount (5) and/or the coupling jaw (11), with a coating (23) which is elastically deformable during the mounting of the vehicle seat (1).

3. Vehicle seat according to Claim 2, **characterized in that** the elastic deformation occurs while the rear region of the coupling jaw (11) bears against the trough-like holder (7), with the result that the coupling jaw (11) can be stressed in the direction of the bolt (9) during the mounting of the vehicle seat (1).

4. Vehicle seat according to one of Claims 1 to 3, **characterized in that** the means are particularly suitable for compensating for horizontal tolerances transversely with respect to the seat direction and comprise projections (24) which are integrally formed laterally on the coupling jaw (11) and which can be pressed against vertical countersurfaces of the mount (5) during the mounting of the vehicle seat (1).

5. Vehicle seat according to Claim 4, **characterized in that** the projections (24) can be pressed against the spring clip (17) during the mounting of the vehicle seat (1).

6. Vehicle seat according to Claim 4 or 5, **characterized in that** the projections (24), in side view, are designed to surround the coupling jaw (11) in an arcuate manner and, in front view, widen in a wedge-shaped manner in the mounting direction.

7. Vehicle seat according to Claim 6, **characterized in that** the projections (24) are designed to be wavy within the arcuate contour, with the regions of the wavy design that bear orthogonally against the spring clip (17) during mounting preferably having a thickened design.

8. Vehicle seat according to one of Claims 4 to 7, **characterized in that** the projections (24) are integrally formed in one piece on the coating (23).

9. Vehicle seat according to one of the preceding claims, **characterized in that** the coupling jaw (11) can be pushed from behind in the direction of the mount (5) over a horizontal surface of the vehicle body during the mounting of the vehicle seat (1) and, on reaching the mount (5), can be brought into engagement therewith without further assistance.

10. Vehicle seat according to Claim 9, **characterized in that**, on reaching the mount (5), the coupling jaw (11) can be introduced downwardly into the trough-like holder (7) under the action of gravity and while engaging around the bolt (9).

## Revendications

1. Siège de véhicule (1), en particulier banquette de siège pour un véhicule automobile, qui peut être ancré de manière détachable au sol du véhicule (2) au moyen d'au moins une griffe d'accrochage (11) venant en prise autour d'un logement (5), comprenant des moyens pour compenser les tolérances entre la griffe d'accrochage (11) et le logement (5), le logement (5) comprenant un boulon horizontal (9) s'étendant transversalement à la direction du siège, qui est disposé dans une fixation (7) en forme de cuvette, et les moyens étant appropriés en particulier pour compenser les tolérances dans la direction verticale et comprenant des moyens de ressort (16) qui, lors du montage du siège de véhicule (1), peuvent être pressés par la griffe d'accrochage (11) contre le boulon (9), **caractérisé en ce que** les moyens de ressort (16) sont réalisés sous forme d'un étrier de ressort (17) fixé sur la surface arrière verticale (15) de la fixation (7), qui s'étend en forme de U sous le boulon (9) vers l'avant et qui, lors du montage du siège de véhicule (1), peut être serré vers le haut par l'arête avant inférieure (21) de la griffe d'accrochage (11).

2. Siège de véhicule selon la revendication 1, **caractérisé en ce que** les moyens sont appropriés en particulier pour compenser les tolérances horizontales dans la direction du siège, et la griffe d'accrochage (11) et/ou le logement (5) sont pourvus, au moins dans la région de l'appui contre le logement (5) et/ou la griffe d'accrochage (11), d'un revêtement (23), qui peut être déformé élastiquement lors du montage du siège de véhicule (1).

3. Siège de véhicule selon la revendication 2, **caractérisé en ce que** la déformation élastique a lieu dans l'appui de la région arrière de la griffe d'accrochage (11) contre la fixation (7) en forme de cuvette, de sorte que la griffe d'accrochage (11) puisse être serrée dans la direction du boulon (9) lors du montage du siège de véhicule (1).

4. Siège de véhicule selon l'une quelconque des revendications 1 à 3, **caractérisé en ce que** les moyens sont appropriés en particulier pour compenser les tolérances horizontales transversalement à la direction du siège, et comprennent des saillies (24) façonnées latéralement sur la griffe d'accrochage (11), qui, lors du montage du siège de véhicule (1), peuvent être pressées contre des surfaces conjuguées du logement (5).

5. Siège de véhicule selon la revendication 4, **caractérisé en ce que** les saillies (24) peuvent être pressées contre l'étrier de ressort (17) lors du montage du siège de véhicule (1).

6. Siège de véhicule selon la revendication 4 ou 5, **caractérisé en ce que** les saillies (24), en vue de côté, sont réalisées de manière à entourer en forme d'arc la griffe d'accrochage (11) et s'élargissent en forme de cale dans la direction de montage, en vue de face.

7. Siège de véhicule selon la revendication 6, **caractérisé en ce que** les saillies (24) sont réalisées sous forme ondulée à l'intérieur du contour en forme d'arc, les régions de la réalisation de forme ondulée qui s'appliquent perpendiculairement lors du montage contre l'étrier de ressort (17) étant réalisées de préférence sous forme épaissie.

8. Siège de véhicule selon l'une quelconque des revendications 4 à 7, **caractérisé en ce que** les saillies (24) sont façonnées d'une seule pièce sur le revêtement (23).

9. Siège de véhicule selon l'une quelconque des revendications précédentes, **caractérisé en ce que** la griffe d'accrochage (11) peut être poussée lors du montage du siège de véhicule (1) depuis l'arrière dans la direction du logement (5) sur une surface horizontale du côté de la carrosserie et à l'atteinte du logement (5), peut être amenée en prise avec celui-ci sans autre opération.

10. Siège de véhicule selon la revendication 9, **caractérisé en ce que** la griffe d'accrochage (11) peut être amenée vers le bas dans la fixation (7) en forme de cuvette une fois qu'elle atteint le logement (5), sous l'effet de la force de pesanteur et engagement périphérique du boulon (9).
